# EUROPÄISCHE PATENTANMELDUNG

(11) **EP 1 126 577 A1**
(43) Veröffentlichungstag der Anmeldung: **22.08.2001**
(21) Anmeldenummer: 01250051.8
(22) Anmeldetag: 16.02.2001
(51) Int. Cl.: H02K 1/27, H02K 1/12, H02K 1/14, H02K 21/14, H02K 5/173

(54) **Elektrische Maschine**

(30) Priorität: 16.02.2000 DE 10007064; 17.04.2000 DE 10018962
(71) Anmelder: Franz Kessler KG, 88422 Bad Buchau (DE)
(72) Erfinder: Herwanger, Eckhard, Dipl.-Ing., 88422 Bad Buchau (DE); Rondè, Uwe, Dr. Ing., 88525 Dürmentingen-Hailtingen (DE); Hill, Wolfgang, Dipl.-Ing., 76135 Karlsruhe (DE)
(74) Vertreter: Roth, Klaus

(57) **Zusammenfassung**

Es wird eine Synchronmaschine (1) vorgeschlagen, der gegenüber herkömmlichen Synchronmaschinen (1) mit einem deutlich reduzierten konstruktiven Aufwand realisiert als auch einfacher montiert werden kann und Wirbelströme reduziert. Dies wird erfindungsgemäß dadurch erreicht, dass ein Magnetsystem (3) ohne ein Trägersystem auf der Welle (2) angeordnet ist.

## Beschreibung

Die Erfindung betrifft eine elektrische Maschine, insbesondere Synchronmaschine, nach dem Oberbegriff des Anspruchs 1.

Bislang werden Elektromotoren verwendet, vor allem im Bereich der Synchronmotoren, bei denen die zur Erzeugung des Magnetflusses benötigten Permanentmagnete auf einer Hülse, einer Hülsenbefestigung oder in einem Träger, beispielsweise aus Elektroblech, angebracht sind. Diese Einheit wird im Allgemeinen mittels Schrumpfen oder Pressen unlösbar bzw. quasi unlösbar auf der Welle befestigt.

Diese herkömmlichen Synchronmotoren sind insgesamt aufwendig aufgebaut und vergleichsweise aufwendig zu montieren. Die Wicklung besteht meist aus vorgewickelten Drahtspulen die durch dem Rotor zugewandte Nutschlitze in die Nuten eingelegt werden. In den vorgewickelten Spulen können Überschneidungen der Drähte nicht ausgeschlossen werden. Weiterhin erfordert der Schutz der Drähte vor den Kanten des Blechpakets die Anordnung von stabilen Schichtstoffen im Nutschlitz während des Einlegens. Die Breite des Nutzschlitz beträgt daher mindestens die Summe aus der doppelten Drahtstärke plus die doppelte Dicke des Schichtstoffes.

Nutschlitze im Stator erzeugen im sich bewegenden Rotor pulsierende Magnetfelder, die wiederum Wirbelströme mit einer Frequenz entsprechend dem Produkt aus Drehzahl mal Nutzahl induzieren. Besonders bei permanenterregten Elektromotoren und Generatoren mit hohen Drehzahlen sind die Wirbelstromverluste die überwiegende Ursache für eine Erwärmung des Rotors.

Aufgabe der Erfindung ist es demgegenüber, eine Synchronmaschine vorzuschlagen, mit dem der konstruktive Aufwand deutlich reduziert und die Montage vereinfacht wird sowie Wirbelströme reduziert werden.

Diese Aufgabe wird ausgehend von einem Elektromotor, insbesondere Synchronmotor, der einleitend genannten Art durch die kennzeichnenden Merkmale des Anspruchs 1 gelöst.

Durch die in den Unteransprüchen genannten Maßnahmen sind vorteilhafte Ausführungen und Weiterbildungen der Erfindung möglich.

Dementsprechend zeichnet sich eine erfindungsgemäße elektrische Maschine, insbesondere Synchronmaschine, dadurch aus, dass das Magnetsystem ohne ein Trägersystem auf der Welle angeordnet ist.

Mit Hilfe eines derartigen Magnetsystems wird bei gleichen Motorabmessungen ein größerer Wellendurchmesser mit eventuell größerer Wellenbohrung realisierbar. Folglich lässt sich beispielsweise bei gleicher mechanischer Stabilität der Rotorwelle, d.h. gleicher Dimensionierung der Rotorwelle, ein vergleichsweise kompakter bzw. klein dimensionierte Synchronmaschine realisieren.

Gleichzeitig wird hierdurch die zu beschleunigende Masse verringert, so dass das Trägheitsmoment der Welle reduziert ist und folglich die Leistung der Maschine, bei gleicher Ausgangsleistung, verringert werden kann.

Das Magnetsystem ist für die Erregung eines Magnetfeldes ausgebildet, beispielsweise mit Erregerspulen. Vorteilhafterweise umfasst das Magnetsystem jedoch wenigstens einen Permanentmagneten, so dass ein Synchronmotor mit besonders geringem konstruktivem Aufwand realisiert wird. So ist die Welle für den Einbau in ein Gehäuse bereits fertig vorbereitet, wenn die Lagerung und der Permanentmagnet auf der Welle montiert ist.

In einer besonderen Ausführungsform ist das Magnetsystem mit der Welle klebend verbunden. Hierdurch wird in vorteilhafter Weise gewährleistet, dass das Magnetsystem auch bei höheren Drehzahlen fest mit der Welle verbunden bleibt. Gleichzeitig treten hierbei aufgrund der realisierten Verbindung keine Spannungen im Magnetsystem beziehungsweise in den Permanentmagneten auf.

Alternativ wird die Verbindung des Magnetsystems mit der Welle vorzugsweise schraubend realisiert. In vorteilhafter Weise kann auch magnetisches Material in von der Welle vorgegebene Bereiche eingelassen werden, wobei das magnetische Material gegossen, gesintert oder anderweitig mit der Welle in Verbindung gebracht wird. Eine Kombination der entsprechenden Verbindungen ist ebenfalls möglich.

In einer weiteren besonderen Ausbildung der Erfindung umfasst die Welle im Bereich des Magnetsystems wenigstens teilweise einen hartmagnetischen Werkstoff, so dass die Welle selbst im Bereich des Magnetsystems magnetisierbar ist. Hierdurch wird in vorteilhafter Weise der Fertigungsaufwand für die Welle weiter reduziert.

Vorteilhafterweise besteht die Welle wenigstens im Bereich des Magnetsystems größtenteils aus weichmagnetischem Werkstoff, so dass die Welle zum Leiten des Magentflusses verwendbar ist. Hierdurch wird in einfacher Weise ein sogenannter Magnetschluss gewährleistet, der beim Stand der Technik im Allgemeinen über das weichmagnetische Trägersystem erfolgt.

Bei der Fertigung der Welle muss in diesem Fall darauf geachtet werden, dass die weichmagnetischen Eigenschaften der Welle im Bereich des Magnetsystems nicht mittels Wärmebehandlung oder mechanischer Bearbeitung beeinträchtigt wird. Aus diesem Grund können beispielsweise Stähle mit weniger Chromanteilen entsprechend vorteilhaft eingesetzt werden.

In einer besonderen Weiterbildung der Erfindung ist die elektrische Maschine zwei- oder mehrpolig, so dass in vorteilhafter Weise die Laufeigenschaften der elektrischen Maschine für die jeweiligen Einsatzzwecke angepasst werden.

Vorzugsweise ist ein Innendurchmesser der vorderen Lagerung größer als ein Außendurchmesser des Rotors, einschließlich eines Außendurchmessers des Magnetsystems, so dass zur Montage des vorderen Lagers beziehungsweise der Synchronmaschine beispielsweise sowohl das vordere Lager, das Magnetsystem als auch das hintere Lager von einer Seite der Welle montierbar beziehungsweise die beiden Lager auch bei auf dem Rotor montierten Magnetsystem demontierbar sind.

Bei einer elektrischen Maschine gemäß dem Stand der Technik mit einem herkömmlichen Magnetsystem, das einen vergleichsweise großen Außendurchmesser aufweist, ist die erfindungsgemäße Montage bzw. Demontage vertretbarer Größe des vorderen Lagers nicht möglich.

Weiterhin erhöht sich durch die erfindungsgemäße Dimensionierung der vorderen Lagerung in vorteilhafter Weise die konstruktive Ausgestaltungsmöglichkeit des abtriebseitigen Flansches der Welle, wobei der Flansch je nach Bedarf beispielsweise daran anzubringende Komponenten aufnehmen kann. So kann der Flansch beispielsweise einen deutlich größeren Durchmesser als der Innendurchmesser des vorderen Lagers besitzen. Hierbei kann die Welle, einschließlich des Flansches, aus einem präzis zu fertigenden Stück gefertigt werden oder ein separater Flansch kann auf der Welle montiert werden. Bei einem erfindungsgemäßen Synchronmotor ist somit gewährleistet, dass auch ein beschädigtes oder defektes vorderes Lager ohne Demontage des Magnetsystems oder des abtriebseitigen Flansches der Welle über den hinteren Bereich des Rotors austauschbar ist.

Vorteilhafterweise weist die Welle wenigstens im Bereich des Magnetsystems einen Querschnitt mit einer kreis- oder vieleckförmigen äußeren Form und das Magnetsystem eine entsprechende kreis- oder vieleckförmige Ausnehmung auf. Hiermit wird beispielsweise bei spröden Permanentmagneten mit vergleichsweise großen Durchmessern und geringer Wandstärke eine vergleichsweise einfache Herstellung und Montage gewährleistet.

Vorteilhafterweise umfasst das Magnetsystem eine Bandage, so dass die Sicherheit der Magnetsystemanordnung auch bei hohen Drehzahlen bzw. Beanspruchungen gewährleistet ist. So wird ein Wegschleudern beziehungsweise Zerbrechen des Magnetsystems in vorteilhafter Weise unterbunden.

In einer besonderen Weiterbildung der Erfindung besteht die Bandage im Wesentlichen aus einem Stahlnetz, einem Drahtgeflecht und/oder aus einem Glasfasergewebe. Besonders die Ausführungsform mit einem Stahlnetz oder einem Drahtgeflecht realisiert einen besonders vorteilhaften elektromagnetische Aufbau des Magnetsystems.

Der Stator der elektrischen Maschine besteht vorteilhafterweise aus Polsegmenten, die insbesondere nach dem Bewickeln von der Jochseite vorzugsweise durch Jochsegmente oder einen Jochring magnetisch miteinander verbunden werden. Durch das Bewickeln von der Jochseite können Nutschlitze weitgehend vermieden werden. Bei einem nahezu konstanten Abstand von weichmagnetischen Teilen des Rotors und des Stators werden Schwankungen der Reaktanz im Luftspalt und hierdurch verursachte Wirbelströme im Rotor weitgehend vermieden. Der Rotor bleibt trotz der guten elektrischen Leitfähigkeit der ungeblechten Welle kühl.

Über die frei wählbare Breite der Nutschlitze und die Höhe der Polschuhe kann die Eigeninduktivität der Maschine in einem weiten Bereich vorgegeben werden. Unabhängig von der Windungszahl und dem Luftspalt kann die Eigeninduktivität durch vergleichsweise enge Nutzschlitze und hohe Polschuhe bis auf einen Wert gesteigert werden der für einen gewünschten Feldschwächfaktor nahezu optimal ist. Der Feldschwächfaktor ist hierbei das Verhältnis der Eckpunktdrehzahl zur maximalen Drehzahl, wobei bei der Eckpunktdrehzahl die induzierte Spannung in etwa der Versorgungsspannung entspricht. Der Feldschwächbereich insbesondere einer Synchronmaschine mit Luftspaltmagneten kann einerseits deutlich vergrößert werden und andererseits wird eine erhebliche Verminderung der für die Feldschwächung erforderlichen Ströme erreicht.

Vorzugsweise werden die Pol- und Jochsegmente bei größeren elektrischen Maschinen als getrennte Blechpakete vorfertigt. Alternativ können die weichmagnetischen Segmenten auch durch einen Steg zwischen den Polschuhen verbunden aus einer Ronde als sternförmiger Blechschnitt oder aus einem Band als kammförmiger Streifen hergestellt werden. Ein derartiger Streifen wird anschließend vorteilhaft zu einem ringförmigen Blechpaket gewendelt, wobei die Biegung des Streifens in den dünnen Stegen zwischen den Segmenten erfolgt.

Bei Innenläufermaschinen mit kleinen Rotordurchmessern und langen Blechpaketen wird durch das Bewickeln von der Jochseite, d. h. radial von außen, in vorteilhafter Weise das Einlegen der Wicklung wesentlich vereinfacht. In vergleichsweise kurzer Zeit lassen sich die vorzugsweise vorgefertigten Teilspulen mit möglichst geringen Verformungen exakt im Nutraum positionieren. Vorteilhafterweise sind hohe Nutfüllfaktoren realisierbar und gegebenenfalls durch das Eindrücken der Jochsegmente oder das Aufschieben des Jochrings kann eine zusätzliche Verdichtung des Leitervolumens erfolgen. Mit steigendem Leitervolumen sinken vorzugsweise der Wicklungswiderstand und damit die Wärmeverluste in der Wicklung.

Die Vermeidung von Wirbelstromverlusten insbesondere durch Reaktanzschwankungen senkt in vorteilhafter Weise die Rotorverluste. Die Verminderung der Feldschwächströme durch eine auf den nahezu optimalen Wert einstellbare Eigeninduktivität und die Senkung des Wicklungswiderstandes durch einen vergleichsweise hohen Nutfüllfaktor senkt die Wicklungsverluste.

Zusätzlich können vor allem durch die Segmentierung des Statorblechpakets beispielsweise Elektrobleche mit vorteilhafter Kornorientierung eingesetzt werden, die ergänzend die magnetischen Verluste um ca. 70% gegenüber nichtorientierten Elektroblechen vermindern.

Der prinzipiell gleiche Aufbau von verschiedensten elektrischen Maschinen bedingt, dass die Erfindung auch vorteilhafterweise sowohl bei verschiedensten Elektromotor- oder Generator-Varianten, z.B. synchron oder asynchron Maschinen als auch bei entsprechenden Bremsen oder dergleichen vorgesehen werden kann.

Ein Ausführungsbeispiel der Erfindung ist in der Zeichnung dargestellt und wird anhand der Figuren nachfolgend näher erläutert.

Im Einzelnen zeigt
- Fig. 1: einen Ausschnitt aus einem schematischen Längsschnitt einer erfindungsgemäßen Synchronmaschine und
- Fig. 2: einen Ausschnitt aus einem schematischen Querschnitt einer erfindungsgemäßen Synchronmaschine.

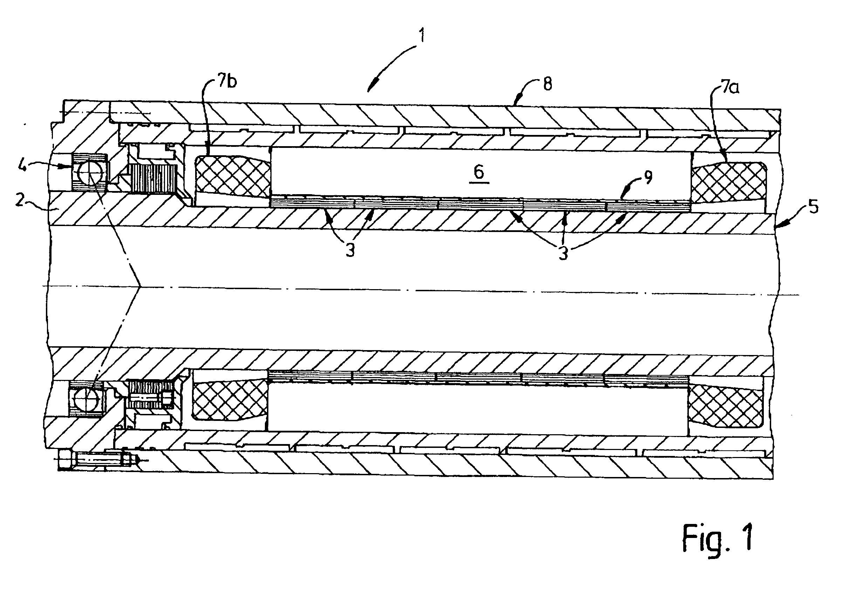

Eine Synchronmaschine 1, der in Figur 1 dargestellt ist, weist beispielhaft eine röhrenförmige Welle 2 auf. Im mittleren Bereich der Welle 2 sind einzelne Permanentmagnete 3 angeordnet. Die Permanentmagnete 3 sind auf die Welle 2 aufgeklebt. Mittels einer Bandage 9 wird ein Wegschleudern bzw. Zerbrechen der Permanentmagnete 3 auch bei hohen Motordrehzahlen unterbunden.

Weiterhin ist in Figur 1 eine vordere Lagerung 4 dargestellt, wobei diese einen Innendurchmesser besitzt, der größer als ein Außendurchmesser des Rotors 5 im mittleren beziehungsweise im hinteren Bereich der Welle 2 ist. Folglich kann die vordere Lagerung 4 über den Bereich der Permanentmagnete 3 hinweg montiert bzw. demontiert werden.

Figur 1 zeigt zusätzlich neben weiteren konstruktiven Elementen einen Stator 6, zwei Wickelköpfe 7a, 7b sowie ein Motorengehäuse 8.

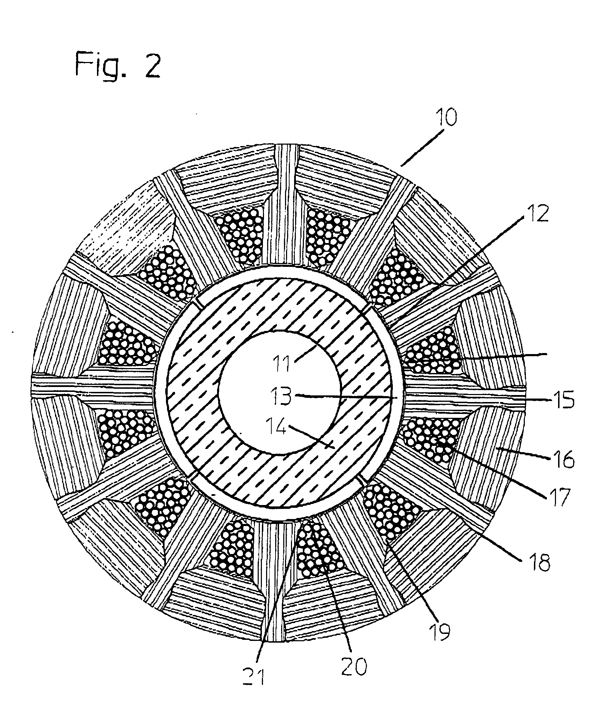

Fig. 2 zeigt den Querschnitt einer vierpoligen Synchronmaschine mit radial innerhalb des Stators 10 angeordnetem Rotor 11. Der Rotor 11 weist am Luftspalt 12 angeordnete Permanentmagnete 13 - vorzugsweise aus einer NdFeB-Legierung - und eine Hohlwelle 14 aus magnetisierbarem Vollmaterial auf. Das Statorblechpaket besteht aus zwölf Polsegmenten 15 und zwölf Jochsegmenten 16 aus kornorientierten Elektroblechen, wobei die magnetische Vorzugsrichtung der Polsegmente 15 radial und die der Jochsegmente 16 tangential ist. Nach dem Einlegen der Wicklung 17 zwischen von einer Vorrichtung in ihrer endgültigen Position gehaltenen Polsegmente 15 werden die Jochsegmente 16 radial von außen eingesetzt und an den Fügespalten 18 mit den Polsegmenten 15 verschweißt.

Die trapezförmigen Nuten 19 bilden zum Luftspalt 12 hin schmale Nutschlitze 20. Die Breite der Nutschlitze 20 an der engsten Stelle ist kleiner als die Luftspaltweite, die dem Abstand zwischen den Permanentmagneten 13 und den Polsegmenten 15 entspricht. Durch Oberflächentoleranzen können benachbarte Polsegmente 15 im Bereich der Nutschlitze 20 auch unmittelbar aneinander stoßen. Zur Erhöhung der Eigeninduktivität weisen Polschuhe 21 an den zum Nutschlitz 20 weisenden Seiten eine radiale Höhe auf, die größer ist als die zur Führung des Magnetflusses erforderliche Höhe.

Im Leerlauf streut ein Teil des von dem Permanentmagneten 13 erzeugten Magnetflusses über die Nutschlitze 20 und schwächt so die induzierte Gegenspannung. Mit zunehmendem Strom in den Nuten 19 werden die Polschuhe 21 von elektrisch erzeugten Magnetfeldern bis zur Sättigungsgrenze genutzt. Über die Gestalt der Nutschlitze 20 bzw. Polschuhe 21 lässt sich eine hohe Eigeninduktivität einstellen, die bei höheren Drehzahlen durch den induktiven Spannungsabfall die Klemmenspannung begrenzt. Über die Breite der Fügespalte 18 zwischen den Segmenten 15, 16 kann die Eigeninduktivität ebenfalls beeinflusst werden.

Bezugszeichenliste:
- 1: Synchronmaschine
- 2: Welle
- 3: Permanentmagnet
- 4: Lagerung
- 5: Rotor
- 6: Stator
- 7: Wickelkopf
- 8: Motorengehäuse
- 9: Bandage
- 10: Stator
- 11: Rotor
- 12: Luftspalt
- 13: Permanentmagnet
- 14: Hohlwelle
- 15: Polsegment
- 16: Jochsegment
- 17: Wicklung
- 18: Fügespalt
- 19: Nut
- 20: Nutschlitz
- 21: Polschuh

## Patentansprüche

1. Elektrische Maschine (1), insbesondere Synchronmaschine (1), mit einem Rotor (5), wobei der Rotor (5) ein Magnetsystem (3), eine Welle (2) sowie eine vordere Lagerung (4) umfasst, dadurch gekennzeichnet, dass das Magnetsystem (3) ohne ein Trägersystem auf der Welle (2) angeordnet ist.

2. Elektrische Maschine (1) nach Anspruch 1, dadurch gekennzeichnet, dass das Magnetsystem (3) wenigstens einen Permanentmagneten (3) umfasst.

3. Elektrische Maschine (1) nach einem der vorgenannten Ansprüche, dadurch gekennzeichnet, dass das Magnetsystem (3) mit der Welle (2) klebend verbunden ist.

4. Elektrische Maschine (1) nach einem der vorgenannten Ansprüche, dadurch gekennzeichnet, dass die Welle (2) im Bereich des Magnetsystems (3) wenigstens teilweise einen hartmagnetischen Werkstoff umfasst.

5. Elektrische Maschine (1) nach einem der vorgenannten Ansprüche, dadurch gekennzeichnet, dass die Welle (2) wenigstens im Bereich des Magnetsystems (3) größtenteils aus weichmagnetischem Werkstoff besteht.

6. Elektrische Maschine (1) nach einem der vorgenannten Ansprüche, dadurch gekennzeichnet, dass ein Innendurchmesser der vorderen Lagerung (4) größer als ein Außendurchmesser des Rotors (5) ist.

7. Elektrische Maschine (1) nach einem der vorgenannten Ansprüche, dadurch gekennzeichnet, dass die Welle (2) wenigstens im Bereich des Magnetsystems (3) einen Querschnitt mit einer kreis- oder vieleck-förmigen äußeren Form aufweist.

8. Elektrische Maschine (1) nach einem der vorgenannten Ansprüche, dadurch gekennzeichnet, dass das Magnetsystem (3) eine kreis- oder einen vieleck-förmige Ausnehmung aufweist.

9. Elektrische Maschine (1) nach einem der vorgenannten Ansprüche, dadurch gekennzeichnet, dass das Magnetsystem (3) eine Bandage umfasst.

10. Elektrische Maschine (1) nach einem der vorgenannten Ansprüche, dadurch gekennzeichnet, dass die Bandage im Wesentlichen aus einem Stahlnetz, einem Drahtgeflecht und/oder aus einem Glasfaser-Gewebe besteht.

11. Elektrische Maschine nach einem der vorgenannten Ansprüche, dadurch gekennzeichnet, dass der Stator (10) aus Polsegmenten (15) besteht, die durch Jochsegmente (16) oder einen Jochring magnetisch verbunden sind.

12. Elektrische Maschine nach einem der vorgenannten Ansprüche, dadurch gekennzeichnet, dass benachbarte Polsegmente (15) an der zu einem Luftspalt (12) weisenden Seite einen Nutschlitz (20) ausbilden, dessen Breite kleiner als eine Drahtdicke einer Wicklung (17) und bis auf Null reduzierbar ist.
